# EUROPÄISCHE PATENTSCHRIFT

(11) **EP 2 386 773 B1**
(45) Veröffentlichungstag und Bekanntmachung des Hinweises auf die Patenterteilung: **23.10.2013**
(21) Anmeldenummer: 11165065.1
(22) Anmeldetag: 06.05.2011
(51) Int. Cl.: F16D 31/04

(54) **Kupplungseinrichtung**
Coupling device
Dispositif de couplage

(30) Priorität: 10.05.2010 DE 102010020118
(43) Veröffentlichungstag der Anmeldung: 16.11.2011
(73) Patentinhaber: MAHLE International GmbH, 70376 Stuttgart (DE)
(72) Erfinder: Beez, Günther, 98666, Masserberg (DE)
(74) Vertreter: BRP Renaud & Partner

(56) Entgegenhaltungen:
- EP-A1- 0 012 015
- EP-A2- 0 284 393
- DE-A1- 19 509 978
- DE-A1-102007 031 297
- US-A- 4 188 785

## Beschreibung

Die vorliegende Erfindung betrifft eine Kupplungseinrichtung für insbesondere eine Flüssigkeitspumpe.

Eine gattungsgemäße Kupplungseinrichtung ist aus EP0284393 bekannt.

Insbesondere bei Kühlmittelpumpen in Kraftfahrzeugen erfordert ein stets wechselnder Kühlbedarf eines Verbrennungsmotors eine Anpassung des von der Kühlmittelpumpe zu fördernden Kühlmittelstroms, was bspw. durch eine geeignete Kupplungseinrichtung bewirkt werden kann. Bei einem lediglich reduzierten Kühlmittelbedarf wird dabei die Kupplungseinrichtung teilweise geöffnet und dadurch eine Antriebskraft an die Kühlmittelpumpe reduziert. Derartige Kupplungseinrichtungen sind bislang jedoch vergleichsweise aufwändig und dadurch teuer.

Die vorliegende Erfindung beschäftigt sich mit dem Problem, für eine Kupplungseinrichtung eine verbesserte Ausführungsform anzugeben, die insbesondere konstruktiv einfach aufgebaut und dadurch kostengünstig ausgebildet ist und die zugleich eine exakt und fein steuerbare Kupplungsfunktion erfüllt.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine Kupplungseinrichtung derart auszubilden, dass diese nicht nur das volle Antriebsdrehmoment übertragen kann, sondern alternativ auch beliebige Teildrehmomente und dies ohne die dabei bei herkömmlichen Kupplungen, bspw. durch ein Schleifen der Kupplungsscheiben, auftretenden Verschleißerscheinungen. Die erfindungsgemäße Kupplungseinrichtung weist dabei ein Kupplungsgehäuse auf, in welchem eine Antriebswelle sowie eine Abtriebswelle antriebsverbindbar gelagert sind. Die Abtriebswelle ist dabei vorzugsweise drehfest mit einem, eine Innenverzahnung aufweisenden Außenrotor verbunden, während die Antriebswelle über einen exzentrischen Mitnehmer mit einem, eine Außenverzahnung aufweisenden Innenrotor verbunden ist. Dabei ist selbstverständlich klar, dass alternativ der Außenrotor drehfest mit der Antriebswelle und der Innenrotor über einen entsprechenden Mitnehmer mit der Abtriebswelle verbunden sein kann. Um eine Verdrehung des Innenrotors im Außenrotor zu ermöglichen, weist die Außenverzahnung des Innenrotors zumindest einen Zahn weniger auf als die Innenverzahnung des Außenrotors, wobei beide Rotoren in einem mit Fluid beaufschlagten Kupplungsraum angeordnet sind. Um ein Öffnen sowie ein Schließen der erfindungsgemäßen Kupplungseinrichtung zu steuern, ist zusätzlich noch eine Steuereinrichtung vorgesehen, mit der ein Druck des Fluids im Kupplungsraum und dadurch eine Drehmomentübertragung von der Antriebswelle auf die Abtriebswelle gesteuert werden können. Herrscht dabei ein hoher Druck des Fluids im Kupplungsraum, so bewirkt dieser hohe Druck, dass später noch zu erläuternde Ausgleichsöffnungen kommunizierend miteinander verbunden werden, wodurch ein Druckausgleich erfolgt und ein von der Kupplungseinrichtung übertragbares Drehmoment reduziert wird. Bei geringem bzw. drucklosem im Kupplungsraum vorgesehenen Fluid, kann ein derartiger Druckausgleich bzw. Fluidstromausgleich nicht erfolgen, wodurch die Antriebswelle drehfest mit der Abtriebswelle verbunden ist. Dies ist insbesondere für den Einsatz der erfindungsgemäßen Kupplungseinrichtung im Bereich von Kühlmittelpumpen bei Verbrennungsmotoren von großem Vorteil, da selbst bei einem Ausfall der Steuereinrichtung und verbunden damit einem Druckabfall des Fluids im Kupplungsraum die Kupplungseinrichtung an sich geschlossen bleibt und dadurch die Kühlmittelpumpe weiterhin Kühlmittel zum Verbrennungsmotor befördert. Durch einen entsprechenden Druckaufbau im Kupplungsraum kann die Kupplungseinrichtung stufenlos geöffnet, das heißt stufenlos zwischen einem vollständig geschlossenen und einem vollständig geöffneten Zustand eingestellt werden. Dies ermöglicht es insbesondere nicht nur eine volle Drehmomentübertragung von der Antriebswelle auf die Abtriebswelle mittels der erfindungsgemäßen Kupplungseinrichtung zu bewirken, sondern zudem nahezu frei wählbare Grade an Drehmomentübertragung, so dass bspw. bei einer 80% geöffneten Kupplung lediglich noch 5 bis 8 % oder auch 20% des Drehmoments von der Antriebswelle auf die Abtriebswelle übertragen werden. Es liegt keine lineare Abhängigkeit der Drehmomentübertragung vor, eher eine quadratische, da es von den betroffenen Querschnitten bzw. Flächen und anderen Einflüssen, wie z.B. der Viskosität des Mediums, abhängt. Ein verschleißbehaftetes Schleifen zweier Kupplungsscheiben, wie dies bei herkömmlichen Kupplungseinrichtungen in diesem Fall erforderlich wäre, tritt bei der erfindungsgemäßen Kupplungseinrichtung jedoch nicht auf, so dass mit der erfindungsgemäßen Kupplungseinrichtung beliebige Drehmomente von der Antriebswelle auf die Abtriebswelle übertragbar sind, ohne dadurch Verschleißerscheinungen zu erzeugen bzw. noch zu vergrößern. Zudem ist die erfindungsgemäße Kupplungseinrichtung konstruktiv einfach aufgebaut, und lässt sich dadurch kostengünstig realisieren.

Erfindungsgemäß wird der Kupplungsraum stirnseitig von einem verstellbaren antriebsseitigen Lagertopf und einem verstellbaren abtriebsseitigen Lagertopf begrenzt, die mittels einer jeweiligen Federeinrichtung gegeneinander vorgespannt sind. Die beiden Lagertöpfe bilden somit die stirnseitigen Wände des Kupplungsraums, und werden mittels der zumindest zwei Federeinrichtungen in die Schließstellung der Kupplungseinrichtung vorgespannt. Wird das im Kupplungsraum vorhandene Fluid mit Druck beaufschlagt, so führt dies zu einer Axialverstellung der beiden Lagertöpfe voneinander weg, wodurch sich der Kupplungsraum vergrößert und zugleich über Strömbohrungen, welche bei geschlossener Kupplungseinrichtung von den Lagertöpfen dicht verschlossen sind, freigegeben werden, über die dann ein Fluidstromausgleich erfolgen kann. Die Axialstellung der beiden Lagertöpfe zueinander korreliert dabei direkt mit einer Drehmomentübertragung von der Antriebswelle auf die Abtriebswelle, wobei die Axialstellung der beiden Lagertöpfe zugleich mit einem Druck innerhalb des Kupplungsraums korreliert, so dass über den in den Kupplungsraum aufgebrachten Fluiddruck direkt Einfluss auf die Schließstellung der Kupplungseinrichtung und damit auf deren Drehmomentübertragungsfähigkeit genommen werden kann. Mit zunehmendem Fluiddruck wird dabei die Kupplungseinrichtung in deren Öffnungsstellung verstellt, so dass bei einer möglichen Leckage, die zu einem Druckabfall innerhalb des Kupplungsraums führt, die Kupplungseinrichtung in jedem Fall in ihrer geschlossenen Stellung verbleibt und dadurch eine Drehmomentübertragung von der Antriebswelle auf die Abtriebswelle gewährleistet werden kann. Durch eine Steigerung des Fluiddrucks innerhalb des Kupplungsraums wird somit lediglich eine Bypassströmung des Fluids ermöglicht, was gleichzeitig zu einer Reduzierung der Drehmomentübertragung führt.

Bei einer vorteilhaften Ausführungsform der erfindungsgemäßen Lösung, sind abtriebsseitig eine Wellmembran sowie ein Reibelement vorgesehen, die bei vollständig geöffneter Kupplungseinrichtung, das heißt bei unter entsprechendem Druck stehenden Kupplungsraum, ein Abbremsen der Abtriebswelle bewirken. Theoretisch ist dabei nämlich denkbar, dass selbst bei vollständig geöffneter Kupplung noch eine zumindest geringfügige Drehmomentübertragung von der Antriebswelle auf die Abtriebswelle erfolgt, was mittels der Wellmembran und dem zugehörigen Reibelement verhindert werden kann. Die Wellmembran sowie das Reibelement sorgen somit dafür, dass bei vollständig geöffneter Kupplungseinrichtung keine Drehmomentübertragung mehr erfolgt und die Abtriebswelle somit nicht mehr rotiert. Dabei kann bei vollständig geöffneter Kupplungseinrichtung bspw. das Reibelement an der Wellmembran anliegen und durch die dadurch entstehende Reibung das Abbremsen der Abtriebswelle bis zu deren Stillstand bewirken.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine mögliche Ausführungsform einer erfindungsgemäßen Kupplungseinrichtung,
- Fig. 2, 3: weitere mögliche Ausführungsformen der erfindungsgemäßen Kupplungseinrichtung,
- Fig. 4: eine Schnittdarstellung im Bereich des Innenrotors und des Außenrotors,
- Fig. 5, 6: eine Schnittdarstellung im Bereich von Ausgleichsöffnungen,
- Fig. 7: eine Schnittdarstellung im Bereich von Entlüftungsöffnungen.

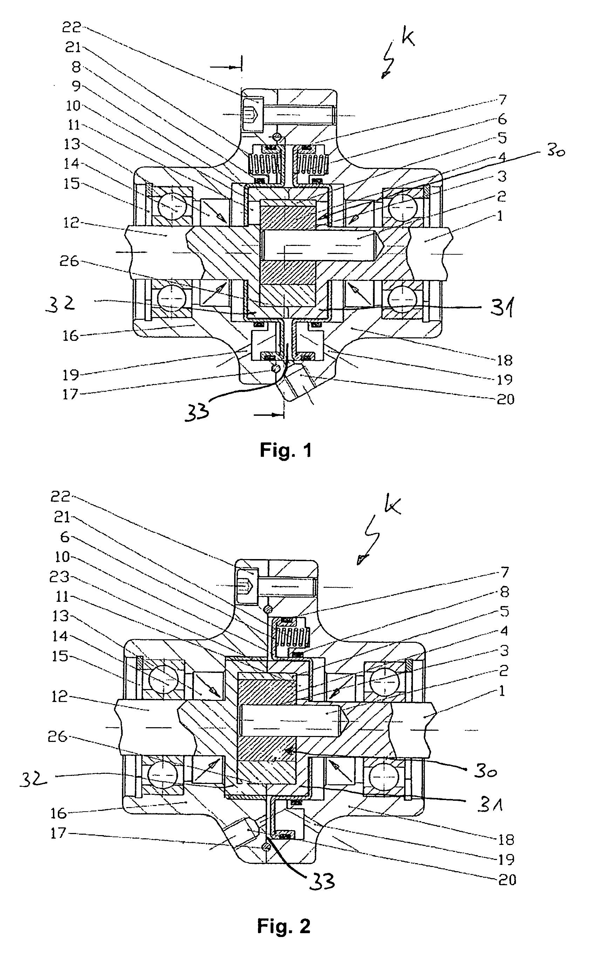

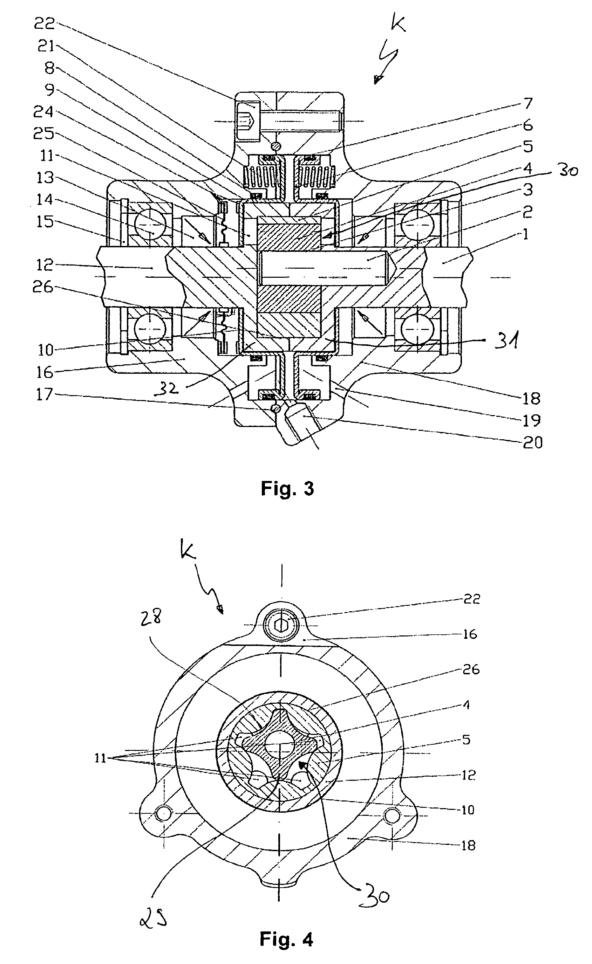

Entsprechend der Fig. 1, weist eine erfindungsgemäße Kupplungseinrichtung K, bspw. für eine nicht dargestellte Kühlmittelpumpe eines Verbrennungsmotor, eine Antriebswelle 1 sowie eine Abtriebswelle 12 auf, die in einem Kupplungsgehäuse, welches im vorliegenden Fall aus zwei Gehäuseteilen 16, 18 zusammengesetzt ist, antriebsverbindbar gelagert sind. Die beiden Gehäuseteile 16, 18 sind dabei über mehrere Gehäuseschrauben 22, von denen eine gemäß den Fig. 1 bis 3 dargestellt ist, dicht miteinander verschraubt. Betrachtet man die Fig.1 bis 3 weiter, so kann man erkennen, dass die Abtriebswelle 12 drehfest mit einem, eine Innenverzahnung 28 (vgl. Fig. 4) aufweisenden Außenrotor 5 und die Antriebswelle 1 über einen exzentrischen Mitnehmer 2 mit einem, eine Außenverzahnung 29 aufweisenden Innenrotor 4 verbunden ist. In diesem Fall besitzt die Außenverzahnung 29 des Innenrotors 4 vier Zähne, wogegen die Innenverzahnung 28 des Außenrotors 5 fünf Zähne, das heißt also einen Zahn mehr als die Außenverzahnung 29 aufweist. Denkbar ist selbstverständlich auch, dass die Außenverzahnung 29 bspw. sechs Zähne und die Innenverzahnung 28 bspw. sieben Zähne aufweist. Durch die Tatsache, dass die Außenverzahnung 29 des Innenrotors 4 zumindest einen Zahn weniger aufweist als die Innenverzahnung 28 des Außenrotors 5, lässt sich der Innenrotor 4 im Außenrotor 5 verdrehen. Beide Rotoren 4, 5 sind dabei in einem mit Fluid beaufschlagten Kupplungsraum 30 angeordnet, wobei eine nicht dargestellte Steuereinrichtung vorgesehen ist, mit der ein Druck des Fluids im Kupplungsraum 30 und dadurch eine Drehmomentübertragung von der Antriebswelle 1 auf die Abtriebswelle 12 gesteuert werden können.

Die Kupplungseinrichtung K gemäß der Fig. 1 ist dabei im Weiteren wie folgt aufgebaut. Stirnseitig wird der Kupplungsraum 30 von einem verstellbaren antriebsseitigen Lagertopf 6 und einem verstellbaren abtriebsseitigen Lagertopf 9 begrenzt, die mittels zumindest einer jeweiligen Federeinrichtung 21 gegeneinander vorgespannt sind. Zur Erhöhung der Leichtgängigkeit der Kupplungseinrichtung K, ist am Außenrotor 5 und/oder an zumindest einem Lagertopf 6, 9 eine Gleitbeschichtung 10 angeordnet, die zur Reibungsreduzierung beiträgt. Des Weiteren kann man gemäß der Fig. 1 erkennen, dass an der Abtriebswelle 12 und an der Antriebswelle 1 jeweils stirnseitig eine topfförmige Aufnahme 31, 32 vorgesehen ist, wobei der Außenrotor 5 in der topfförmigen Aufnahme 32 der Abtriebswelle 12 über einen Presssitz 26 fixiert ist. Beide topfförmigen Aufnahmen 31, 32 sind dabei innerhalb der beiden Lagertöpfe 6, 9 angeordnet.

In zumindest einer der beiden topfförmigen Aufnahmen 31, 32, bei der Kupplungseinrichtung K gemäß der Fig. 1 in beiden topfförmigen Aufnahmen 31, 32, sind dabei Ausgleichsöffnungen 11 vorgesehen, die bei geschlossener Kupplungseinrichtung K vom zugehörigen Lagertopf 6, 9 verschlossen und bei zumindest teilweise geöffneter Kupplungseinrichtung K zumindest geringfügig geöffnet sind Die beiden Federeinrichtungen 21 bewirken, dass sich die Kupplungseinrichtung K bei nicht unter Druck stehendem Fluid einem Raum 33 in geschlossener Stellung befindet, so dass eine direkte Drehmomentübertragung von der Antriebswelle 1 auf die Abtriebswelle 12 erfolgen kann. Dies ist insbesondere im Hinblick auf ein so genanntes "Fail-Safe-Prinzip" von großer Bedeutung, so dass auch bei einem fehlerbedingten Druckabfall des Fluids innerhalb des Raums 33 weiter eine Drehmomentübertragung gewährleistet werden kann. Soll die Kupplungseinrichtung K in einen zumindest teilweise geöffneten Zustand überführt werden, so wird über eine Ansteueröffnung 20 Fluid mit entsprechendem Druck in einen Raum 33 eingebracht, woraufhin sich gemäß der Fig. 1 die beiden Lagertöpfe 6, 9 in Axialrichtung voneinander weg bewegen und dadurch die Ausgleichsöffnungen 11 geöffnet werden. Über den Druck des Fluids im Raum 33 ist dabei eine Axialstellung der beiden Lagertöpfe 6, 9 einstellbar, wobei diese Axialstellung direkt mit einer Drehmomentübertragung von der Antriebswelle 1 auf die Abtriebswelle 12 korreliert.

Gemäß der Fig. 2 ist dabei denkbar, dass auch lediglich ein einziger verstellbarer Lagertopf, hier der antriebsseitige Lagertopf 6 in Axialrichtung verstellbar ist, weil dann die entsprechenden Ausgleichsöffnungen 11 auch lediglich in der antriebsseitigen topfförmigen Aufnahme 31 vorgesehen sind. In dem Kupplungsraum 30 zwischen dem Innenrotor 4 und dem Außenrotor 5 befindet sich ein Fluid, das unter Druck steht. Wird der Lagertopf 6 durch Druckeinbringung über die Öffnung 20 in den Raum 33 zwischen den beiden Lagertöpfen 9 und 6 oder nur 6 bewegt, hier nach außen bewegt, so hat das Fluid im Kupplungsraum 30 zwischen Innenrotor 4 und Außenrotor 5 mehr Platz, da der Raum jenseits der Ausgleichsöffnungen 11 (nicht gezeigt) nun dem Fluid zur Verfügung steht. Dadurch kann der Innenrotor 4 sich frei im Außenrotor 5 bewegen und es wird kein Drehmoment mehr von dem einen auf den anderen Rotor übertragen. Soll die Pumpe wieder Kühlmittel oder ein anderes Medium verstärkt pumpen so wird weniger Druck auf die Lagertöpfe 6 und 9 gegeben und der Lagertopf 9, 6 drückt das Fluid aus dem Raum jenseits der Ausgleichöffnungen 11 über den Ausgleichsöffnungen 11 wieder zwischen Innen- 4 und Außenrotor 5. Das Fluid, das sich im Kupplungsraum 30 befindet, kann daraus nicht entweichen da die Lagertöpfe 6, 9 dicht mit den Aufnahmen 31, 32 verbunden sind. Die Ausgleichöffnungen 11 können durch Bohrungen dargestellt werden.

Gemäß der Fig. 3 ist eine Kupplungseinrichtung K dargestellt, die im Wesentlichen derjenigen der Kupplungseinrichtung K aus Fig. 1 entspricht, wobei zusätzlich abtriebsseitig eine Wellmembran 25 sowie ein Reibelement 24 vorgesehen sind, die bei vollständig geöffneter Kupplungseinrichtung K ein Abbremsen der Abtriebswelle 12 bewirken, indem diese in Reibkontakt zueinander gefahren werden.

Der Mitnehmer 2, welcher bspw. als einfacher Bolzen ausgebildet sein kann, ist dabei über ein Mitnehmerlager 3 bezüglich des Innenrotors 4 gelagert. Darüber hinaus sind zur Abdichtung des Kupplungsraums 30 innere Dichtmanschetten 8 sowie äußere Dichtmanschetten 7 vorgesehen. Zur abtriebsseitigen Abdichtung der Kupplungseinrichtung K ist darüber hinaus ein Wellendichtring 13 vorgesehen, wobei die beiden Wellen 1 und 12 über jeweils ein Kugellager 14 gelagert sind. Eine Axialsicherung der Kugellager 14 kann dabei bspw. über einen Sicherungsring 15 erfolgen. Zwischen den beiden Gehäuseteilen 16, 18 ist darüber hinaus ein Dichtring 17 angeordnet, der ein unbeabsichtigtes Austreten von Fluid aus der Kupplungseinrichtung K zuverlässig verhindert. Um das Verfahren des zumindest einen Lagertopfs 6, 9 zu ermöglichen, ist darüber hinaus zumindest eine Entlüftung 19 vorgesehen.

Mit der erfindungsgemäßen Kupplungseinrichtung K kann eine äußerst flexible Kupplungsfunktion erreicht werden, wobei die erfindungsgemäße Kupplungseinrichtung K generell in der Lage ist auch Teildrehmomente von der Antriebswelle 1 auf die Abtriebswelle 12 zu übertragen, ohne dabei einen auffälligen Verschleiß aufzuzeigen.

Gemäß der Fig. 4 ist eine Schnittdarstellung durch die erfindungsgemäße Kupplungseinrichtung K gezeigt, wobei im gezeigten Beispiel der Innenrotor 4 eine Außenverzahnung 29 mit vier Zähnen aufweist, die in einer fünf Zähne aufweisenden Innenverzahnung 28 des Außenrotors 5 umläuft bzw. taumelt.

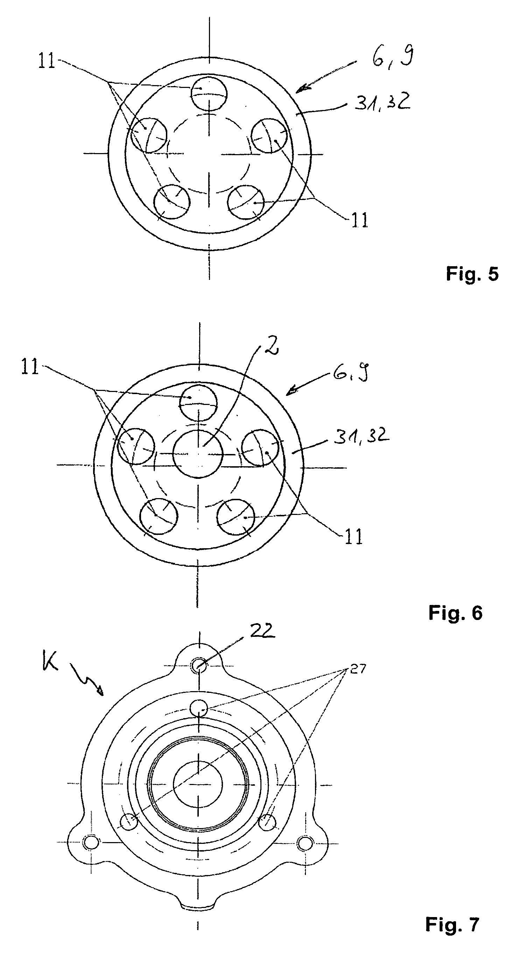

Gemäß den Fig. 5 und 6 sind die Ausgleichsöffnungen 11 bspw. der topfförmigen Aufnahme 31 bzw. 32 gezeigt. Insgesamt sind dabei fünf Strömbohrungen 11 dargestellt, wobei deren Anzahl vorzugsweise an die Anzahl der Zähne der Innenverzahnung 28 des Außenrotors 5 angepasst ist.

Gemäß der Fig. 7 sind darüber hinaus Entlüftungsbohrungen 27 gezeigt, die einen durch die Verstellung der Lagertöpfe 6, 9 erzeugten Druck ausgleichen, indem sie eine kommunizierende Verbindung mit der Umgebung bilden. Generell kann die erfindungsgemäße Kupplungseinrichtung K kostengünstig und konstruktiv einfach hergestellt werden, wobei sie darüber hinaus äußerst exakt zu schalten ist, so dass insbesondere nicht nur ein volles oder nahezu kein Drehmoment übertragbar ist, sondern auch in äußerst flexibler Weise sämtliche zwischen >0 und 100% liegende Teildrehmomente. Größer null wird durch die Flüssigkeitsreibung bewirkt eine minimale Drehmomentübertragung. Die erfindungsgemäße Kupplungseinrichtung K wird insbesondere bei Kühlmittelpumpen von Verbrennungsmotoren eingesetzt, kann aber selbstverständlich auch für beliebige andere Anwendungen herangezogen werden.

## Patentansprüche

1. Kupplungseinrichtung (K) für insbesondere eine Flüssigkeitspumpe,
- mit einem Kupplungsgehäuse, in welchem eine Antriebswelle (1) und eine Abtriebswelle (12) antriebsverbindbar gelagert sind,
- wobei die Abtriebswelle (12) drehfest mit einem, eine Innenverzahnung (28) aufweisenden Außenrotor (5) und die Antriebswelle (1) über einen exzentrischen Mitnehmer (2) mit einem, eine Außenverzahnung (29) aufweisenden Innenrotor (4) verbunden ist, oder umgekehrt,
- wobei die Außenverzahnung (29) des Innenrotors (4) zumindest einen Zahn weniger aufweist als die Innenverzahnung (28) des Außenrotors (5), so dass der Innenrotor (4) im Außenrotor (5) verdrehbar ist,
- wobei der Außenrotor (5) und der Innenrotor (4) in einem mit Fluid beaufschlagten Kupplungsraum (30) angeordnet sind,
- wobei eine Steuereinrichtung vorgesehen ist, mit der ein Druck des Fluids im Kupplungsraum (30) und dadurch eine Drehmomentübertragung von der Antriebswelle (1) auf die Abtriebswelle (12) gesteuert werden können,
**dadurch gekennzeichnet,**
**dass** der Kupplungsraum (30) stirnseitig zumindest von einem verstellbaren antriebsseitigen Lagertopf (6) und einem insbesondere verstellbaren abtriebsseitigen Lagertopf (9) begrenzt wird, die mittels zumindest einer jeweiligen Federeinrichtung (21) gegeneinander vorgespannt sind.

2. Kupplungseinrichtung nach Anspruch 1,
**dadurch gekennzeichnet,**
**dass** am Außenrotor (5) und/oder an zumindest einem Lagertopf (6, 9) eine Gleitbeschichtung (10) angeordnet ist.

3. Kupplungseinrichtung nach Anspruch 1 oder 2,
**dadurch gekennzeichnet,**
**dass** an der Abtriebswelle (12) und an der Antriebswelle (1) jeweils stirnseitig eine topfförmige Aufnahme (31, 32) vorgesehen ist, wobei der Außenrotor (5) in der topfförmigen Aufnahme (32) der Abtriebswelle (12) über einen Presssitz (26) fixiert ist, wobei die Abtriebswelle (12) und die Antriebswelle (1) jeweils mir ihren jeweiligen topfförmigen Aufnahmen (31, 32) aus einem Stück hergestellt sind.

4. Kupplungseinrichtung nach Anspruch 3,
**dadurch gekennzeichnet,**
**dass** die topfförmigen Aufnahmen (31, 32) innerhalb der beiden Lagertöpfe (6,9) angeordnet sind.

5. Kupplungseinrichtung nach Anspruch 3 oder 4,
**dadurch gekennzeichnet,**
**dass** in zumindest einer der beiden topfförmigen Aufnahmen (31, 32) Ausgleichsöffnungen (11) vorgesehen sind, die bei geschlossener Kupplungseinrichtung (K) vom zugehörigen Lagertopf (31, 32) verschlossen und bei zumindest teilweise geöffneter Kupplungseinrichtung (K) zumindest geringfügig geöffnet sind und dadurch ein Entkoppeln der Abtriebs- (12) zur Antriebswelle (1) ermöglichen.

6. Kupplungseinrichtung nach einem der Ansprüche 3 bis 5,
**dadurch gekennzeichnet,**
**dass** über den Druck des Fluids in einem Raum (33) eine Axialstellung zumindest eines Lagertopfs (6,9) einstellbar ist, wobei die Axialstellung mit einer Drehmomentübertragung von der Antriebswelle (1) auf die Abtriebswelle (12) korreliert.

7. Kupplungseinrichtung nach einem der Ansprüche 1 bis 6,
**dadurch gekennzeichnet,**
**dass** abtriebsseitig eine Wellmembran (25) und ein Reibelement (24) vorgesehen sind, die bei vollständig geöffneter Kupplungseinrichtung (K) ein Abbremsen der Abtriebswelle (12) bewirken.

8. Kupplungseinrichtung nach einem der Ansprüche 1 bis 7,
**dadurch gekennzeichnet,**
**dass** die Außenverzahnung (29) des Innenrotors (4) zumindest vier Zähne und die Innenverzahnung (28) des Außenrotors (5) zumindest fünf Zähne aufweist.

9. Kühlmittelpumpe mit einer Kupplungseinrichtung (K) nach einem der Ansprüche 1 bis 8.

## Claims

1. A coupling device (K), in particular for a fluid pump,
- with a coupling housing in which a drive shaft (1) and an output shaft (12) are mounted in a drivingly connectable manner,
- wherein the output shaft (12) is connected in a rotationally fixed manner to an outer rotor (5) having an internal tooth system (28), and the drive shaft (1) is connected via an eccentric driving pin (2) to an inner rotor (4) having an external tooth system (29), or vice versa,
- wherein the external tooth system (29) of the inner rotor (4) has at least one tooth less than the internal tooth system (28) of the outer rotor (5) so that the inner rotor (4) is rotatable in the outer rotor (5),
- wherein the outer rotor (5) and the inner rotor (4) are arranged in a coupling chamber (30) on which a fluid acts,
- wherein a control device is provided by means of which a pressure of the fluid in the coupling chamber (30) and therefore a torque transmission from the drive shaft (1) to the output shaft (12) can be controlled,
**characterized in**
**that** the coupling chamber (30) is bordered on its front sides by at least one adjustable bearing pot (6) on the drive side, and in particular by an adjustable bearing pot (9) on the output side, which are pretensioned against each other by means of at least one respective spring device (21).

2. The coupling device according to claim 1,
**characterized in**
**that** an anti-friction coating (10) is arranged on the outer rotor (5) and/or at least on one bearing pot (6. 9).

3. The coupling device according to claim 1 or claim 2,
**characterized in**
**that** on the output shaft (12) and on the drive shaft (1) at each of the front sides thereof a pot-shaped receptacle (31, 32) is provided, wherein the outer rotor (5) is fixed in the pot-shaped receptacle (32) of the output shaft (12) via a press fit (26), wherein the output shaft (12) and the drive shaft (1) are each made from one piece together with their respective pot-shaped receptacles (31, 32).

4. The coupling device according to claim 3,
**characterized in**
**that** the pot-shaped receptacles (31, 32) are arranged within the two bearing pots (6, 9).

5. The coupling device according to claim 3 or claim 4,
**characterized in**
**that** in at least one of the two pot-shaped receptacles (31, 32), equalizing openings (11) are provided which are closed by the associated bearing pot (31, 32) when the coupling device (K) is closed, and which are at least slightly opened when the coupling device (K) is at least partially opened, and thereby enable decoupling the output shaft (12) from the drive shaft (1).

6. The coupling device according to any one of the claims 3 to 5,
**characterized in**
**that** an axial position of at least one bearing pot (6, 9) can be adjusted via the pressure of the fluid in the chamber (33), wherein the axial position correlates with a torque transmission from the drive shaft (1) to the output shaft (12).

7. The coupling device according to any one of the claims 1 to 6,
**characterized in**
**that** on the output side, a corrugated diaphragm (25) and a friction element (24) are provided which effect deceleration of the output shaft (12) when the coupling device (K) is fully opened.

8. The coupling device according to any one of the claims 1 to 7,
**characterized in**
**that** the external tooth system (29) of the inner rotor (4) has at least four teeth and the internal tooth system (28) of the outer rotor (5) has at least five teeth.

9. A coolant pump with a coupling device (K) according to any one of the claims 1 to 8.

## Revendications

1. Dispositif d'accouplement (K), notamment pour une pompe à liquide,
- comportant un logement d'accouplement, dans lequel un arbre d'entraînement (1) et un arbre de sortie (12) sont positionnés de manière à être reliés avec entraînement,
- dans lequel l'arbre de sortie (12) est relié de manière solidaire en rotation à un rotor extérieur (5) présentent une denture intérieure (28) et l'arbre d'entraînement (1) est relié par l'intermédiaire d'un élément d'entraînement excentrique (2) à un rotor intérieur (4) présentant une denture extérieure (29), ou inversement,
- dans lequel la denture extérieure (29) du rotor intérieur (4) présente au moins une dent de moins que la denture intérieure (28) du rotor extérieur (5), de sorte que le rotor intérieur (4) puisse être tourné dans le rotor extérieur (5),
- dans lequel le rotor extérieur (5) et le rotor intérieur (4) sont disposés dans un espace d'accouplement (30) sollicité par un fluide,
- dans lequel un dispositif de commande est prévu, avec lequel une pression du fluide dans l'espace d'accouplement (30) et ainsi une transmission de couple de rotation peuvent être commandées de l'arbre d'entraînement (1) à l'arbre de sortie (12),
**caractérisé en ce que**
l'espace d'accouplement (30) est délimité du côté avant au moins par un pot de roulement (6) déplaçable du côté d'entraînement et un pot de roulement (9) déplaçable notamment du côté de sortie, qui sont précontraints l'un contre l'autre au moyen d'au moins un dispositif de ressort (21) respectif.

2. Dispositif d'accouplement selon la revendication 1,
**caractérisé en ce que**
un revêtement coulissant (10) est disposé sur le rotor extérieur (5) et/ou sur au moins un pot de roulement (6, 9).

3. Dispositif d'accouplement selon les revendications 1 ou 2,
**caractérisé en ce que**
sur l'arbre de sortie (12) et sur l'arbre d'entraînement (1) un réceptacle en forme de pot (31, 32) est respectivement prévu du côté avant, dans lequel le rotor extérieur (5) est fixé dans le réceptacle en forme de pot (32) de l'arbre de sortie (12) par l'intermédiaire d'un ajustement par pressage (26), dans lequel l'arbre de sortie (12) et l'arbre d'entraînement (1) sont respectivement fabriqués à partir d'une pièce avec leur réceptacles (31, 32) respectifs en forme de pot.

4. Dispositif d'accouplement selon la revendication 3,
**caractérisé en ce que**
les réceptacles en forme de pot (31, 32) sont disposés à l'intérieur des deux pots de roulement (6, 9).

5. Dispositif d'accouplement selon les revendications 3 ou 4,
**caractérisé en ce que**
dans au moins un des deux réceptacles en forme de pot (31, 32), des ouvertures de compensation (11) sont prévues, qui sont obturées par le pot de roulement afférent (31, 32) quand le dispositif d'accouplement (K) est fermé et qui sont ouvertes au moins de manière minime quand le dispositif d'accouplement (K) est au moins partiellement ouvert et permettent ainsi une désolidarisation de l'arbre de sortie (12) par rapport à l'arbre d'entraînement (1).

6. Dispositif d'accouplement selon une des revendications 3 à 5,
**caractérisé en ce que**
une position axiale d'au moins un pot de roulement (6, 9) peut être réglée par l'intermédiaire de la pression du fluide dans un espace (33), dans lequel la position axiale est corrélée avec une transmission de couple de rotation de l'arbre d'entraînement (1) à l'arbre de sortie (12).

7. Dispositif d'accouplement selon une des revendications 1 à 6,
**caractérisé en ce que**
du côté de sortie, une membrane cellulaire (25) et un élément de friction (24) sont prévus, qui provoquent, lorsque le dispositif d'accouplement (K) est complètement ouvert, un freinage de l'arbre de sortie (12).

8. Dispositif d'accouplement selon une des revendications 1 à 7,
**caractérisé en ce que**
la denture extérieure (29) du rotor intérieur (4) présente au moins quatre dents et la denture intérieure (28) du rotor extérieur (5) présente au moins cinq dents.

9. Pompe de liquide de refroidissement comportant un dispositif d'accouplement (K) selon une des revendications 1 à 8.
